# EUROPÄISCHE PATENTSCHRIFT

(11) **EP 1 106 325 B1**
(45) Veröffentlichungstag und Bekanntmachung des Hinweises auf die Patenterteilung: **07.08.2002**
(21) Anmeldenummer: 00126056.1
(22) Anmeldetag: 29.11.2000
(51) Int. Cl.: B29C 45/52

(54) **Rückstromsperre**
Anti-backflow valve
Clapet anti-retour

(30) Priorität: 10.12.1999 DE 19959495
(43) Veröffentlichungstag der Anmeldung: 13.06.2001
(73) Patentinhaber: Battenfeld GmbH, D-58540 Meinerzhagen (DE)
(72) Erfinder: Holzschuh, Johann, Ing., 58540 Meinerzhagen (DE)

(56) Entgegenhaltungen:
- WO-A-97/19800
- DE-A- 19 836 871
- US-A- 5 164 207
- PATENT ABSTRACTS OF JAPAN vol. 013, no. 577 (M-910), 20. Dezember 1989 (1989-12-20) -& JP 01 242222 A (TOSHIBA MACH CO LTD), 27. September 1989 (1989-09-27) -& DATABASE WPI Week 198945 Derwent Publications Ltd., London, GB; AN 1989-327475 XP002162127

## Beschreibung

Die Erfindung betrifft eine Rückstromsperre, die am Ende einer Plastifizier- und Einspritzschnecke angeordnet ist, um den Fluß von Kunststoffschmelze vom Bereich der Schneckengänge der Plastifizier- und Einspritzschnecke zum Bereich des Schneckenvorraums eines Schneckenzylinders zu steuern, in dem sich die Plastifizier- und Einspritzschnecke befindet,
wobei die Rückstromsperre einen Grundkörper aufweist, der mit der Plastifizier- und Einspritzschnecke verbunden ist, und
ein Außenteil, das relativ zum Grundkörper zumindest translatorisch, vorzugsweise auch rotatorisch, beweglich ist, um in einer ersten Position den Fluß von Kunststoffschmelze freizugeben und in einer zweiten Position den Fluß von Kunststoffschmelze zu verhindern.

Gattungsgemäße Rückstromsperren sind im Stand der Technik hinlänglich bekannt. Die Aufgabe einer Rückstromsperre ist es, bei Rotation der Plastifizier- und Einspritzschnecke die vom Materialtrichter über die Schnecke mit ihren Schneckengängen geförderte Kunststoffschmelze in den Schneckenvorraum gelangen zu lassen und das Zurückfließen der Schmelze beim Einspritzen der Schmelze in das Spritzgießwerkzeug - durch translatorische Verschiebung der Schnecke - zu verhindern.

Es sind eine Vielzahl von Rückstromsperren für Spritzgießmaschinen bekannt, die durch eines ihrer Merkmale in zwei Ausführungsformen eingeteilt werden können; dieses Merkmal betrifft die Ausgestaltung des Außenteils der Rückstromsperre, das mit der Innenwand des Schneckenzylinders in Kontakt kommt:

Die erste Gruppe der Rückstromsperren hat ein nicht zwangsweise mitrotierendes Außenteil, das mit dem Grundkörper der Rückstromsperre nicht in Zwangsverbindung steht.

Die zweite Gruppe der Rückstromsperren hat ein zwangsweise rotierendes Außenteil, das mit dem Grundkörper der Rückstromsperre zwangsweise mitdreht.

Die der ersten Gruppe zuzurechnenden Rückstromsperren haben den Vorteil, daß zwischen der zylindrischen Mantelfläche des Außenteils und der Innenwand des Schneckenzylinders keine Relativbewegung bei der Schneckenrotation stattfindet. Nachteilhaft ist hier jedoch, daß an den sich berührenden Axialflächen eine hohe Flächenpressung zwischen dem rotierenden Teil (Grundkörper der Sperre) und dem nicht rotierenden Teil (Außenteil) auftritt, die zur Zerstörung der Rückstromsperre führen kann.

Die Rückstromsperren der zweiten Gruppe haben den Nachteil, daß zwischen der zylindrischen Mantelfläche des Außenteils und der Innenwand des Schneckenzylinders eine Relativbewegung bei Schneckendrehung auftritt und es dadurch zu Verschleiß kommt, der sowohl die Rückstromsperre als auch die Innenwand des Schneckenzylinders angreift. Vorteilhaft ist hingegen bei dieser Ausführungsform, daß Verschleiß der Axialflächen wegen der fehlenden Relativbewegung des Außenteils relativ zum Grundkörper der Rückstromsperre nicht auftritt.

Beiden Ausführungsformen ist gemeinsam, daß das Verhindern des Schmelzerückflusses durch eine axiale Verschiebung von Bauteilen - nämlich des Außenteils relativ zum Grundkörper der Rückstromsperre - durch die während des Beginns der Einspritzbewegung auf sie durch Überdruck wirkende Axialkraft bewerkstelligt wird und aufgrund der axial angeordneten Dichtflächen ein vollständiger Schmelzerückfluß erst bei Berührung der Dichtflächen und gleichzeitig wirkender hoher Anpreßkraft erfolgt.

Der Erfindung liegt im Lichte dieser vorbekannten Ausführungsformen von Rückstromsperren die **Aufgabe** zugrunde, eine Rückstromsperre zu schaffen, die mit einer minimalen Anzahl von Bauteilen auskommt und es ermöglicht, die jeweils vorteilhaften Eigenschaften der oben genannten beiden Gruppen von Rückstromsperren zu vereinigen. Gleichzeitig sollen das Auftreten der jeweils bekannten Nachteile der beiden Gruppen soweit wie möglich vermieden werden. Das Schließverhalten der Rückstromsperre soll schließlich verbessert werden, wobei es insbesondere möglich werden soll, ohne große Axialkräfte ein sicheres Schließen der Sperre zu bewerkstelligen und ein sanftes Schließen zu erreichen.

Die **Lösung** dieser Aufgabe durch die Erfindung ist dadurch gekennzeichnet,
daß das Außenteil (7) mindestens zwei Schmelzeleitungen (10, 11) aufweist, die nicht miteinander in Verbindung stehen, und
daß der Grundkörper (6) mindestens eine Schmelzeleitung (12) aufweist,
wobei die mindestens zwei Schmelzeleitungen (10, 11) des Außenteils (7) zusammen mit der Schmelzeleitung (12) des Grundkörpers (6) in der ersten Position (8) zusammen eine fluidische Verbindung zwischen dem Bereich der Schneckengänge (3) und dem Bereich des Schneckenvorraums (4) bilden und
wobei die fluidische Verbindung zwischen dem Bereich der Schneckengänge (3) und dem Bereich des Schneckenvorraums (4) in der zweiten Position (9) durch einen Bereich (13) des Grundkörpers (6) unterbrochen wird.

Erfindungsgemäß ist also vorgesehen, daß das Außenteil der Rückstromsperre zusammen mit dem Grundkörper der Sperre - bei entsprechender relativer Position von Außenteil und Grundkörper zueinander - einen Schmelzefließweg bilden können, der jedoch bei Verschiebung dieser beiden Teile zueinander unterbrochen werden kann.

Fortbildungsgemäß ist vorgesehen, daß die Schmelzeleitungen (10, 11) im Außenteil (7) durch Bohrungen gebildet werden. Dabei können jeweils mehrere Bohrungen (10, 11) über den Umfang des Außenteils (7) angeordnet sein. Die Bohrungen (10, 11) sind dabei bevorzugt äquidistant über den Umfang des Außenteils (7) angeordnet. Des weiteren kann aus rheologischen Gründen bevorzugt vorgesehen sein, daß der Winkel (a) zwischen der Achse der Bohrungen (10, 11) und der Rotationsachse der Plastifizier- und Einspritzschnecke (2) zwischen 30° und 90° liegt, vorzugsweise bei 45°.

Die Schmelzeleitung (12) des Grundkörpers (6) können als Ausnehmung in der Umfangsfläche des Grundkörpers (6) ausgebildet sein.

Auch die vorgeschlagene Rückstromsperre kommt nicht ohne Relativbewegungen zwischen Bauteilen aus. Daher ist vorgesehen, daß der Außenumfang des Außenteils (7) mit einer verschleißarmen Schicht versehen, insbesondere beschichtet, ist. Das gleiche gilt für den Innenumfang des Außenteils (7). Des weiteren kann vorgesehen werden, daß die Anlageflächen des Grundkörpers (6), an denen das Außenteil (7) anliegen kann, mit einer verschleißannen Schicht versehen, insbesondere beschichtet, ist.

Gemäß einer bevorzugten Ausführungsform ist vorgesehen, daß der Grundkörper (6) eine Spitze (14) aufweist, wobei Grundkörper (6) und Spitze (14) einstückig oder miteinander verschraubt ausgebildet sind. Weiterhin kann der Grundkörper (6) mit der Plastifizier- und Einspritzschnecke (2) fest verschraubt oder unlösbar verbunden sein. Schließlich kann das Außenteil (7) eine im wesentlichen hohlzylindrische Form aufweisen.

Mit der erfindungsgemäßen Ausgestaltung werden verschiedene Vorteile erreicht:
- Die Rückstromsperre kommt mit einer minimalen Zahl von Bauteilen aus. Die Sperre ist entsprechend kostengünstig herzustellen.
- Es treten geringe Gleitgeschwindigkeiten zwischen den sich berührenden Teilen auf, wodurch die Rückstromsperre entsprechend verschleißarm ist.
- Das Außenteil der Rückstromsperre wirkt als Mischteil, was die Homogenität der Kunststoffschmelze verbessert.
- Schließlich und vor allem ist ein sanftes und stetiges Schließen der Rückstromsperre erreichbar.

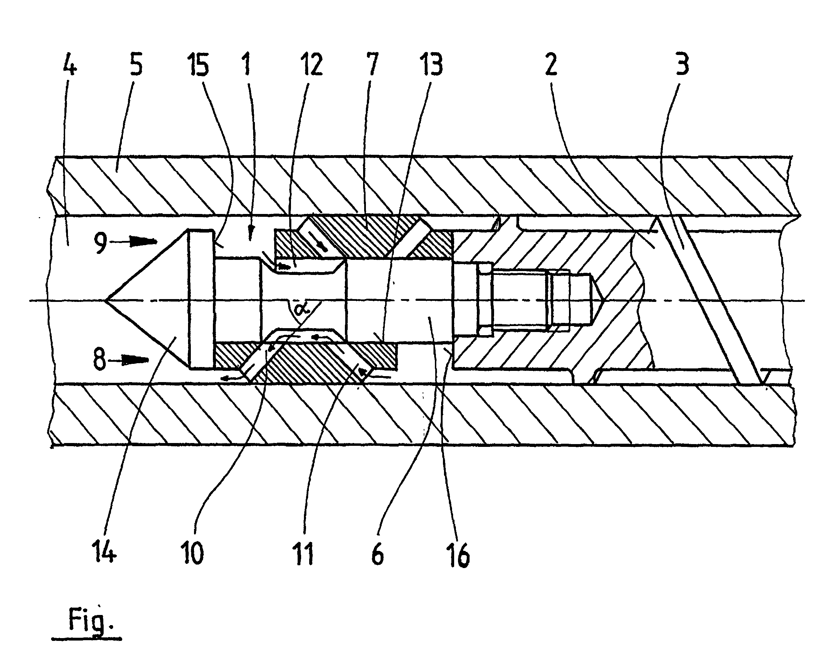

In der Zeichnung ist ein Ausführungsbeispiel der erfindungsgemäßen Rückstromsperre dargestellt. Die einzige Figur zeigt schematisch den Schnitt durch einen Schneckenzylinder samt Plastifizier- und Einspritzschnecke und Rückstromsperre.

Die Figur zeigt einen Schneckenzylinder 5, in dem eine Plastifizier- und Einspritzschnecke 2 drehbeweglich und verschiebbar angeordnet ist. Beim Rotieren der Schnecke 2 wird nicht dargestelltes plastifiziertes Kunststoffmaterial durch Schneckengänge 3 sowie "nach links" in den Bereich des Schneckenvorraums 4 gefördert.

Eine Rückstromsperre 1 ist am Ende der Schnecke 2 angeschraubt. Sie hat eine Spitze 14 und einen Grundkörper 6; Spitze 14 und Grundkörper 6 sind einstückig ausgeführt und mittels einer Schraubverbindung an der Schnecke 2 fixiert.

Zur Steuerung des Schmelzestroms ist auf dem Grundkörper 6 der Sperre 1 ein Außenteil 7 angeordnet. Während der Grundkörper 6 über seinen wesentlichen Bereich als zylindrisches Teil ausgeführt ist, umgibt das Außenteil 7 als hohlzylindrisches Bauteil den Grundkörper 6.

In der Figur ist in der unteren Hälfte eine erste Position 8 des Außenteils 7 relativ zum Grundkörper 6 skizziert, in der die Rückstromsperre geöffnet ist, in der also Schmelze "nach links" transportiert werden kann. In der oberen Bildhälfte ist indes eine zweite Position 9 dargestellt, in der das Außenteil 7 relativ zum Grundkörper 6 so angeordnet ist, daß die Sperre geschlossen ist, also keine Schmelze - weder von "rechts" nach "links" in den Schneckenvorraum 4 strömen kann noch umgekehrt. In der zweiten Position 9 kann also durch eine translatorische Verschiebung der Schnecke 2 "nach links" Schmelze aus dem Vorraum 4 in das nicht dargestellte Spritzgießwerkzeug eingespritzt werden.

In das Außenteil 7 sind zwei Gruppen von Schmelzeleitungen 10 und 11 eingebracht. Diese Leitungen sind als Bohrungen ausgebildet, die jeweils unter einem definierten Winkel α angeordnet sind. Dieser Winkel beträgt zwischen 30° und 90°, bevorzugt ca. 45°.

Gleichermaßen ist in den Außenumfang des zylindrischen Teils des Grundkörpers 6 eine Schmelzeleitung 12 in Form einer Ausnehmung eingearbeitet. Die Ausnehmung ist dabei bevorzugt als rotationssymmetrisch umlaufende Eindrehung ausgeführt.

Wie aus der unteren Bildhälfte zu entnehmen ist, liegt in der geöffneten Stellung 8 der Rückstromsperre 1 das Außenteil 7 am Axialanschlag 15 an der Spitze 14 an. Die Schmelzeleitungen 10, 11 und 12 sind dabei so positioniert, daß sich in dieser Position eine fluidische Verbindung zwischen dem Bereich der Schneckengänge 3 und dem Schneckenvorraum 4 ergibt; in der Figur ist dies durch die Pfeile in der unteren Bildhälfte dargestellt.

Das nicht zwangsweise mitrotierende Außenteil 7 drückt in der Offenstellung auf den Axialanschlag 15 bei einer Relativgeschwindigkeit, die deutlich geringer als die am äußeren Umfang der Schnecke herrschenden Geschwindigkeit ist.

Wird das Außenteil 7 indes durch die translatorische Verschiebebewegung der Schnecke 2 "nach links" an den rechten Axialanschlag 16 bewegt, ist die fluidische Verbindung unterbrochen; die Rückstromsperre ist geschlossen. Der Schmelzerückfluß vom Bereich des Schneckenvorraums 4 zurück in den Bereich der Schneckengänge 3 wird dabei bereits während der Axialverschiebung des Außenteils gestoppt. Der Übergang von der Offenstellung in die Sperrstellung erfolgt allmählich entlang der zylindrischen Berührungsflächen von Grundkörper 6 und Außenteil 7, die als Dichtflächen wirken; diese Dichtwirkung ist unabhängig von der auf das Außenteil 7 wirkenden Axialkraft.

### Bezugszeichenliste:

- 1: Rückstromsperre
- 2: Plastifizier- und Einspritzschnecke
- 3: Bereich der Schneckengänge
- 4: Bereich des Schneckenvorraums
- 5: Schneckenzylinder
- 6: Grundkörper der Rückstromsperre
- 7: Außenteil der Rückstromsperre
- 8: erste Position (Geöffnet-Position)
- 9: zweite Position (Geschlossen-Position)
- 10, 11: Schmelzeleitungen im Außenteil
- 12: Schmelzeleitung im Grundkörper
- 13: Absperrbereich des Grundkörpers
- 14: Spitze
- 15: Axialanschlag an der Spitze
- 16: Axialanschlag an der Schnecke

- α: Winkel zwischen der Achse der Bohrungen und der Rotationsachse der Schnecke

## Patentansprüche

1. Rückstromsperre (1), die zur Steuerung des Flusses von Kunststoffschmelze am Ende einer Plastifizier- und Einspritzschnekke (2) angeordnet ist, um den Fluß von Kunststoffschmelze vom Bereich der Schneckengänge (3) der Plastifizier- und Einspritzschnecke (2) zum Bereich des Schneckenvorraums (4) eines Schneckenzylinders (5) zu steuern, in dem sich die Plastifizierund Einspritzschnecke (2) befindet,
wobei die Rückstromsperre (1) einen Grundkörper (6) aufweist, der mit der Plastifizier- und Einspritzschnecke (2) verbunden ist, und
ein Außenteil (7), das relativ zum Grundkörper (6) zumindest translatorisch, vorzugsweise auch rotatorisch, beweglich ist, um in einer ersten Position (8) den Fluß von Kunststoffschmelze freizugeben und in einer zweiten Position (9) den Fluß von Kunststoffschmelze zu verhindern,
**dadurch gekennzeichnet,**
**daß** das Außenteil (7) mindestens zwei Schmelzeleitungen (10, 11) aufweist, die nicht miteinander in Verbindung stehen, und
**daß** der Grundkörper (6) mindestens eine Schmelzeleitung (12) aufweist,
wobei die mindestens zwei Schmelzeleitungen (10, 11) des Außenteils (7) zusammen mit der Schmelzeleitung (12) des Grundkörpers (6) in der ersten Position (8) zusammen eine fluidische Verbindung zwischen dem Bereich der Schneckengänge (3) und dem Bereich des Schneckenvorraums (4) bilden und
wobei die fluidische Verbindung zwischen dem Bereich der Schneckengänge (3) und dem Bereich des Schneckenvorraums (4) in der zweiten Position (9) durch einen Bereich (13) des Grundkörpers (6) unterbrochen wird.

2. Rückstromsperre nach Anspruch 1, **dadurch gekennzeichnet, daß** die Schmelzeleitungen (10, 11) im Außenteil (7) durch Bohrungen gebildet werden.

3. Rückstromsperre nach Anspruch 2, **dadurch gekennzeichnet, daß** über den Umfang des Außenteils (7) jeweils mehrere Bohrungen (10, 11) angeordnet sind.

4. Rückstromsperre nach Anspruch 3, **dadurch gekennzeichnet, daß** die Bohrungen (10, 11) äquidistant über den Umfang des Außenteils (7) angeordnet sind.

5. Rückstromsperre nach einem der Ansprüche 2 bis 4, **dadurch gekennzeichnet, daß** der Winkel (α) zwischen der Achse der Bohrungen (10, 11) und der Rotationsachse der Plastifizier- und Einspritzschnecke (2) zwischen 30° und 90° liegt, vorzugsweise bei 45°.

6. Rückstromsperre nach einem der Ansprüche 1 bis 5, **dadurch gekennzeichnet, daß** die Schmelzeleitung (12) des Grundkörpers (6) als Ausnehmung in der Umfangsfläche des Grundkörpers (6) ausgebildet ist.

7. Rückstromsperre nach einem der Ansprüche 1 bis 6, **dadurch gekennzeichnet, daß** der Außenumfang des Außenteils (7) mit einer verschleißarmen Schicht versehen, insbesondere beschichtet, ist.

8. Rückstromsperre nach einem der Ansprüche 1 bis 6, **dadurch gekennzeichnet, daß** der Innenumfang des Außenteils (7) mit einer verschleißarmen Schicht versehen, insbesondere beschichtet, ist.

9. Rückstromsperre nach einem der Ansprüche 1 bis 6, **dadurch gekennzeichnet, daß** die Anlageflächen des Grundkörpers (6), an denen das Außenteil (7) anliegen kann, mit einer verschleißarmen Schicht versehen, insbesondere beschichtet, ist.

10. Rückstromsperre nach einem der Ansprüche 1 bis 9, **dadurch gekennzeichnet, daß** der Grundkörper (6) eine Spitze (14) aufweist, wobei Grundkörper (6) und Spitze (14) einstückig oder miteinander verschraubt ausgebildet sind.

11. Rückstromsperre nach Anspruch 10, **dadurch gekennzeichnet, daß** der Grundkörper (6) mit der Plastifizier- und Einspritzschnecke (2) fest verschraubt oder unlösbar verbunden ist.

12. Rückstromsperre nach einem der Ansprüche 1 bis 11, **dadurch gekennzeichnet, daß** das Außenteil (7) eine im wesentlichen hohlzylindrische Form aufweist.

## Claims

1. Anti-backflow valve (1), which is arranged at the end of a plastifying and injection worm (2) for the control of flow of plastic melt, in order to control the flow of plastic melt from the region of the spirals (3) of the plastifying and injection worm (2) to the region of the worm ante-chamber (4) of a worm cylinder (5), in which the plastifying and injection worm (2) is situated,
wherein the anti-backflow valve (1) has a base body (6), which is connected to the plastifying and injection worm (2), and
an outer part (7), which can be moved relative to the base body (6) at least translationally, preferably also rotationally, in order to release the flow of plastic melt in a first position (8) and to prevent the flow of plastic melt in a second position (9), **characterised in that**
the outer part (7) has at least two melt pipes (10, 11), which are not connected to one another, and
**in that** the base body (6) has at least one melt pipe (12),
wherein the at least two melt pipes (10, 11) of the outer part (7) together with the melt pipe (12) of the base body (6) in the first position (8) together form a fluid connection between the region of the spirals (3) and the region of the worm ante-chamber (4), and
wherein the fluid connection between the region of the spirals (3) and the region of the worm ante-chamber (4) in the second position (9) is interrupted by a region (13) of the base body (6).

2. Anti-backflow valve according to claim 1, **characterised in that** the melt pipes (10, 11) in the outer part (7) are formed by bores.

3. Anti-backflow valve according to claim 2, **characterised in that** in each case several bores (10, 11) are arranged over the periphery of the outer part (7).

4. Anti-backflow valve according to claim 3, **characterised in that** the bores (10, 11) are arranged equidistantly over the periphery of the outer part (7).

5. Anti-backflow valve according to one of claims 2 to 4, **characterised in that** the angle (α) between the axis of the bores (10, 11) and the axis of rotation of the plastifying and injection worm (2) lies between 30° and 90°, preferably at 45°.

6. Anti-backflow valve according to one of claims 1 to 5, **characterised in that** the melt pipe (12) of the base body (6) is designed as a recess in the peripheral surface of the base body (6).

7. Anti-backflow valve according to one of claims 1 to 6, **characterised in that** the outer periphery of the outer part (7) is provided, in particular coated, with a low-wear layer.

8. Anti-backflow valve according to one of claims 1 to 6, **characterised in that** the inner periphery of the outer part (7) is provided, in particular coated, with a low-wear layer.

9. Anti-backflow valve according to one of claims 1 to 6, **characterised in that** the contact surfaces of the base body (6), on which the outer part (7) may rest, is provided, in particular coated, with a low-wear layer.

10. Anti-backflow valve according to one of claims 1 to 9, **characterised in that** the base body (6) has a tip (14), wherein base body (6) and tip (14) are designed to be integral or screwed to one another.

11. Anti-backflow valve according to claim 10, **characterised in that** the base body (6) is firmly screwed or non-releasably connected to the plastifying and injection worm (2).

12. Anti-backflow valve according to one of claims 1 to 11, **characterised in that** the outer part (7) has an essentially hollow cylindrical shape.

## Revendications

1. Barrière antireflux (1) qui est placée pour la commande de l'écoulement de plastique fondu à l'extrémité d'une vis de plastification et d'injection (2) pour commander l'écoulement de plastique fondu de la zone du filet (3) de la vis de plastification et d'injection (2) à la zone de l'antichambre de vis (4) d'un cylindre à vis (5) dans lequel se trouve la vis de plastification et d'injection (2),
la barrière antireflux (1) présentant un corps de base (6) qui est joint à la vis de plastification et d'injection (2), et
une pièce extérieure (7) qui est mobile au moins en translation et de préférence aussi en rotation par rapport au corps de base (6) pour, dans une première position (8), permettre l'écoulement de plastique fondu et, dans une deuxième position (9), empêcher cet écoulement,
**caractérisée par le fait**
**que** la pièce extérieure (7) présente au moins deux conduites de matière fondue (10, 11) qui ne communiquent pas entre elles, et
**que** le corps de base (6) présente au moins une conduite de matière fondue (12),
les deux ou plus de deux conduites de matière fondue (10, 11) de la pièce extérieure (7) établissant conjointement avec la conduite de matière fondue (12) du corps de base (6), dans la première position (8), une communication fluidique entre la zone du filet (3) de la vis et la zone de l'antichambre (4) de la vis et
la communication fluidique entre la zone du filet (3) de la vis et la zone de l'antichambre (4) de la vis étant, dans la deuxième position (9), interrompue par une zone (13) du corps de base (6).

2. Barrière antireflux selon la revendication 1, **caractérisée par le fait que** les conduites de matière fondue (10, 11) sont formées dans la pièce extérieure (7) par des trous.

3. Barrière antireflux selon la revendication 2, **caractérisée par le fait que** sur le pourtour de la pièce extérieure (7) sont prévus plusieurs groupes de trous (10, 11).

4. Barrière antireflux selon la revendication 3, **caractérisée par le fait que** les groupes de trous (10, 11) sont équidistants sur le pourtour de la pièce extérieure (7).

5. Barrière antireflux selon l'une des revendications 2 à 4, **caractérisée par le fait que** l'angle (alpha) entre l'axe des trous (10, 11) et l'axe de rotation de la vis de plastification et d'injection (2) est compris entre 30° et 90° et de préférence de 45°.

6. Barrière antireflux selon l'une des revendications 1 à 5, **caractérisée par le fait que** la conduite de matière fondue (12) du corps de base (6) est constituée d'un évidement fait dans la surface périphérique du corps de base (6).

7. Barrière antireflux selon l'une des revendications 1 à 6, **caractérisée par le fait que** le pourtour extérieur de la pièce extérieure (7) est pourvu, en particulier revêtu, d'une couche à faible usure.

8. Barrière antireflux selon l'une des revendications 1 à 6, **caractérisée par le fait que** le pourtour intérieur de la pièce extérieure (7) est pourvu, en particulier revêtu, d'une couche à faible usure.

9. Barrière antireflux selon l'une des revendications 1 à 6, **caractérisée par le fait que** les surfaces d'appui du corps de base (6) sur lesquelles la pièce extérieure (7) peut s'appuyer sont pourvues, en particulier revêtues, d'une couche à faible usure.

10. Barrière antireflux selon l'une des revendications 1 à 9, **caractérisée par le fait que** le corps de base (6) présente une pointe (14), le corps de base (6) et la pointe (14) formant une seule pièce ou étant vissés l'un à l'autre.

11. Barrière antireflux selon la revendication 10, **caractérisée par le fait que** le corps de base (6) est fixé par vissage ou indissolublement lié à la vis de plastification et d'injection (2).

12. Barrière antireflux selon l'une des revendications 1 à 11, **caractérisée par le fait que** la pièce extérieure (7) présente une forme dans l'ensemble cylindrique creuse.
